# EUROPÄISCHE PATENTANMELDUNG

(11) **EP 0 805 102 A1**
(43) Veröffentlichungstag der Anmeldung: **05.11.1997**
(21) Anmeldenummer: 97102748.7
(22) Anmeldetag: 20.02.1997
(51) Int. Cl.: B62L 5/18

(54) **Friktionseinrichtung zur Steuerung einer Klemmrollenkupplung bei Fahrradnaben**

(30) Priorität: 03.05.1996 DE 19617732
(71) Anmelder: FICHTEL & SACHS AG, D-97424 Schweinfurt (DE)
(72) Erfinder: Meier-Burkamp, Gerhard, Dipl.-Ing. (FH), 97493 Bergrheinfeld (DE); Kühne, Karl-Joachim, Dipl.-Ing. (FH), 97464 Niederwerrn (DE)

(57) **Zusammenfassung**

Die Erfindung betrifft eine Friktionseinrichtung zur Steuerung einer Klemmrollenkupplung für eine Antriebseinrichtung oder für eine Rücktritt-Bremseinrichtung (1) bei Fahrradnaben, umfassend ein Antriebsglied (7) mit einem Steigflächenprofil (7a), mindestens eine Rolle (8), einen Käfigring (9) mit Käfigarmen (10), sowie eine Abtriebsglied (2). Um die Bremseinrichtung (1) durch Rückwärtstreten zu aktivieren ist eine Haltekraft über eine Friktionsfeder (22) auf einer Nabenachse (6) erforderlich, die üblicherweise durch eine Schlingfeder hergestellt wird. Um aber in Antriebsdrehrichtung (A) die durch eine solche Friktionsfeder (22) auftretenden Verlust zu minimieren, wird vorgeschlagen, zwischen die Friktionsfeder (22), die als Schlingfeder mit einem Haken (23) ausgerüstet ist, einen Freilauf, bestehend aus einem ersten Rastelement (11) und einem zweiten Rastelement (16), einzuführen, wobei das erste Rastelement (11) mit Mitnehmern (12) drehfest mit Käfigarmen (10) an einem Käfigring (9) angeordnet ist und wohingegen das zweite Rastelement (16) mit dem Haken (23) der Friktionsfeder (22) drehfest verbunden ist. Die Rastelemente (11 und 16) bilden einen Freilauf in Antriebsdrehrichtung (A) durch die Anpreßkraft einer Feder (19), welche gegen diese Antriebsdrehrichtung (A) durch Zähne (17) im zweiten Rastelement (16) und Rastfenster (13) im ersten Rastelement (11) eine Verrasterung bewirkt. Der Vorteil einer solchen Friktionseinrichtung liegt in der nahezu völligen Freiheit von Reibung in der Antriebsdrehrichtung (A), was sich als Wirkungsgradverbesserung für den Fahrradbenutzer niederschlägt.

## Beschreibung

Die Erfindung bezieht sich auf eine Friktionseinrichtung zur Steuerung einer Klemmrollenkupplung für eine Antriebseinrichtung oder für eine Rücktrittbremseinrichtung bei Fahrradnaben gemäß dem Oberbegriff des Anspruchs 1.

Friktionseinrichtungen im Antrieb oder bei Rücktritt-Bremseinrichtungen sind bei Fahrradnaben seit langem bekannt und werden meist dazu verwendet, mit Hilfe einer geringen Kraftkomponente ein Bauteil in einer bestimmten Richtung zu halten oder in eine bestimmte Richtung zu transportieren. Eine solche Friktionsfeder wird beispielsweise in der DE 42 18 409 A1 beschrieben, wo eine Friktionsfeder als Schlingfeder um einen Bremskonus gelegt ist, deren freies Ende mit einem in Drehrichtung fixiertem Bremskonus formschlüssig verbunden ist. Die als Schlingfeder ausgebildete Friktionsfeder umschlingt den Bremskonus in der Weise, daß im Falle des Antriebs die Federwindung aufgebogen werden soll, wodurch die Mitnahmekräfte klein sind. Im Falle der rückwärts gerichteten Drehrichtung beim Bremsen jedoch zieht sich die um den Bremskonus gelegte Windung zu und die Mitnahmekraft wird größer. Diese größere Kraft hindert den Bremskonus daran, sich auf einem Gewinde nach rückwärts zu drehen, wodurch eine axiale Bewegung des Bremskonus herbeigeführt wird, während das mit dem Gewinde verbundene Innenteil sich nach rückwärts weiterdreht. Dieser klassische Fall einer Anwendung einer als Schlingfeder ausgebildeten Friktionsfeder gereicht den Getriebenaben zum Nachteil insofern, als in Antriebsrichtung immer eine Bremskraft überwunden werden muß, die im Vergleich zu Leerlaufnaben meistens bei längerem Betrieb einen höheren Kraftaufwand erfordert.

Die vorliegende Erfindung weist ebenfalls die Verwendung einer als Schlingfeder ausgebildeten Friktionsfeder auf, die um eine Achse einer Mehrgangnabe herum angeordnet ist und ein als Haken aufgebogenes Ende aufweist, wobei die um die Achse herum gelegten Windungen in Antriebsrichtung geringe und in Bremsrichtung hohe Rückhaltekräfte erzeugen. Die in Antriebsrichtung geringen Rückhaltekräfte der Friktionsfeder aber sind es, die mit einem zusätzlichen Freilauf weitgehend eliminiert werden sollen. Die hier als Bremseinrichtung verwendete Klemmrollenkupplung wird beim Rückwärtstreten dadurch aktiviert, daß die Rollen durch Käfigarme an einem Käfigring in ihrer Position festgehalten werden müssen, während ein innenliegendes Antriebsglied mit einem Steigflächenprofil die Rollen nach außen gegen ein diese umfassendes als Bremsmantel ausgebildetes Antriebsglied preßt. Der Freilauf ist also zwischen dem Haken der Friktionsfeder und den Käfigarmen des Käfigringes angeordnet, wobei die Übertragungskräfte in der Antriebsrichtung gegen Null gehen dadurch, daß zwei aneinander liegende durch Federkraft verbundenen Scheiben aneinander vorbeigleiten, die mit einer Rasteinrichtung ausgestattet sind. Die eine der Scheiben ist mit dem Haken der Fiktionsfeder und die andere der Scheiben ist mit den Käfigarmen des Käfigringes drehfest verbunden. In Antriebsrichtung gleiten also die Scheiben aneinander vorbei, während die Rasten übersprungen werden, in der Rücktrittdrehrichtung jedoch greifen die Rasten und verbinden die Käfigarme formschlüssig mit dem Haken der Friktionsfeder, wodurch die Rollen über das Steigflächenprofil des innen rückwärtsdrehenden Antriebsteiles gegen das außenliegende Antriebsglied gepreßt werden. Die Anbringung eines Freilaufes zur Verringerung der Haltekraft der Friktionsfeder bringt den Vorteil einer Wirkungsgradverbesserung der Nabe, die für den Benutzer in allen Übersetzungen beim Treten zugute kommt.

Die Erfindung hat es sich daher zur Aufgabe gemacht, die Haltekräfte einer Friktionsfeder in der Antriebsrichtung durch zusätzliche Maßnahmen gegen Null zu bringen ohne auf die Vorteile der Haltekräfte der Friktionsfeder beim Rückwärtstreten zu verzichten.

Die Lösung der Aufgabe ist in den Ansprüchen beschrieben.

Ein Ausführungsbeispiel einer Friktionseinrichtung zur Steuerung einer Klemmrollenkupplung wird in den anliegenden Figuren beschrieben. Es zeigen:
- Fig. 1: einen Ausschnitt einer Fahrradnabe mit einer Achse, einem Antriebsglied, einer Rolle und einem Abtriebsglied im Teil- Längsschnitt;
- Fig. 2: das Antriebsglied mit Rollen und dem Abtriebsglied im Teil- Querschnitt;
- Fig. 3: den Aufbau eines Freilaufes unter Verwendung einer Friktionsfeder und eines zweiten Rastelementes in perspektivischer Darstellung;
- Fig. 4: eine Darstellung gemäß Fig. 3 unter Hinzufügung eines Rastringes;
- Fig. 5: eine Darstellung gemäß Fig. 4 unter Hinzufügung eines ersten Rastelementes;
- Fig. 6: eine Darstellung des Freilaufes mit dem ersten und zweiten Rastelement, sowie deren Wirkung auf einen Haken der Friktionsfeder in Längsansicht.

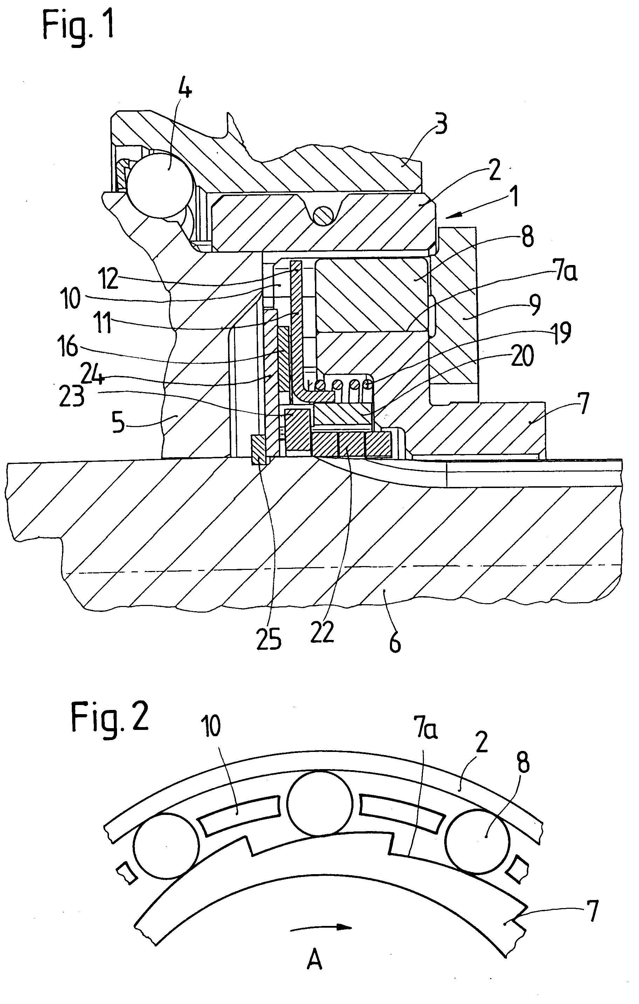

Wird mit 1 eine Rücktritt-Bremseinrichtung bezeichnet, so ist diese auf einer Achse 6 der Fahrradnabe innerhalb der Nabenhülse 3 an einem Ende der Fahrradnabe angeordnet. Gemäß Fig. 1 umfaßt diese Rücktritt-Bremseinrichtung 1 ein Antriebsglied 7 mit einem Steigflächenprofil 7a, Rollen 8, einen Käfigring 9 mit Käfigarmen 10 und ein Abtriebsglied 2, welches als Bremsmantel gegen die Nabenhülse 3 gepreßt werden kann. Die Nabenhülse 3 ist an der Seite der Rücktritt-Bremseinrichtung mit derAchse 6 über ein Lager 4 und einen Bremsstützring 5 verbunden.

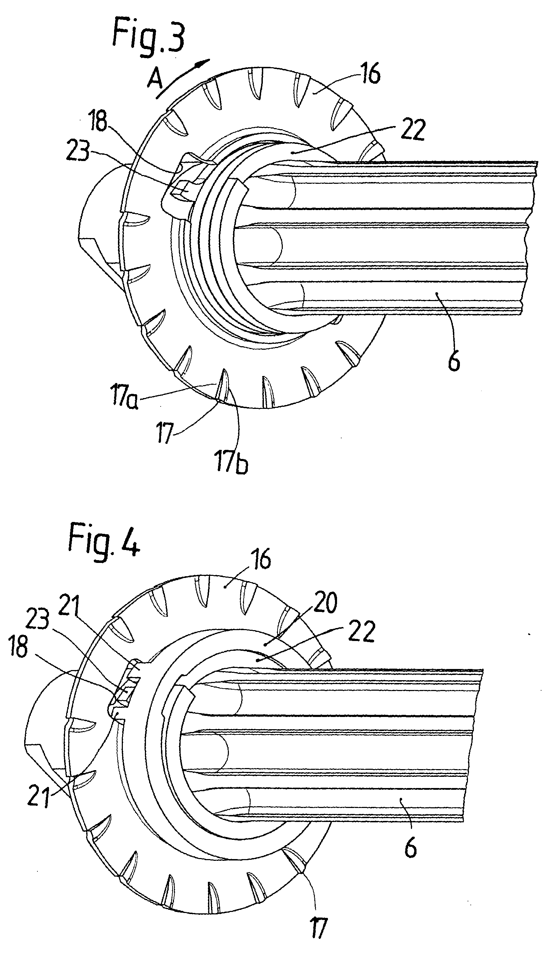

In Fig. 2 ist die Anordnung der Klemmrollenkupplung zwischen dem Antriebsglied 7 und dem Abtriebsglied 2 beschrieben, woraus ersichtlich wird, daß bei einer Drehbewegung des Antriebsgliedes 7 in einer Antriebsdrehrichtung A die Rollen 8 auf dem Steigflächenprofil 7a außer Klemmeingriff kommen, wenn der Käfigring 9 mit seinen Käfigarmen 10 gegen die Antiebsdrehrichtung A zurückgehalten wird. Diese Zurückhaltung wird über ein erstes Rastelement 11 bewirkt, welches mit Mitnehmern 12 zwischen die Käfigarme 10 ragt. Gleichzeitig ist, wie aus Fig. 3 ersichtlich, eine Friktionsfeder 22 als Schlingfeder um die Achse 6 angeordnet, wobei das eine Ende dieser Schlingfeder 22 als Haken 23 nach radial außen angebogen ist. In der den Haken 23 senkrecht zur Mittelachse der Achse 6 liegenden Ebene ist ein zweites Rastelement 16 angeordnet, welches durch Anscheren geformte Zähne 17 aufweist, die als radial verlaufende Kanten 17a in Antriebsrichtung A vorwärts gerichtet angeordnet sind und wobei die Zähne auf ihrer Rückseite entgegen der Antriebsrichtung A unter Bildung einer Schräge 17b in die Scheibenebene zurückverlaufen. Über dem Haken 23 ist ein Durchbruch 18 angeordnet, der einen zusätzlichen Freiraum für zwei Nasen 21 aufweist, die recht und links vom Haken 23 liegen und den Durchbruch 18 ausfüllen. Diese Nasen 21 gehören zu einem Rastring 20, der die Friktionsfeder 22 umgreift und eine Zentrierungsbasis für das erste Rastelement 11 bildet.

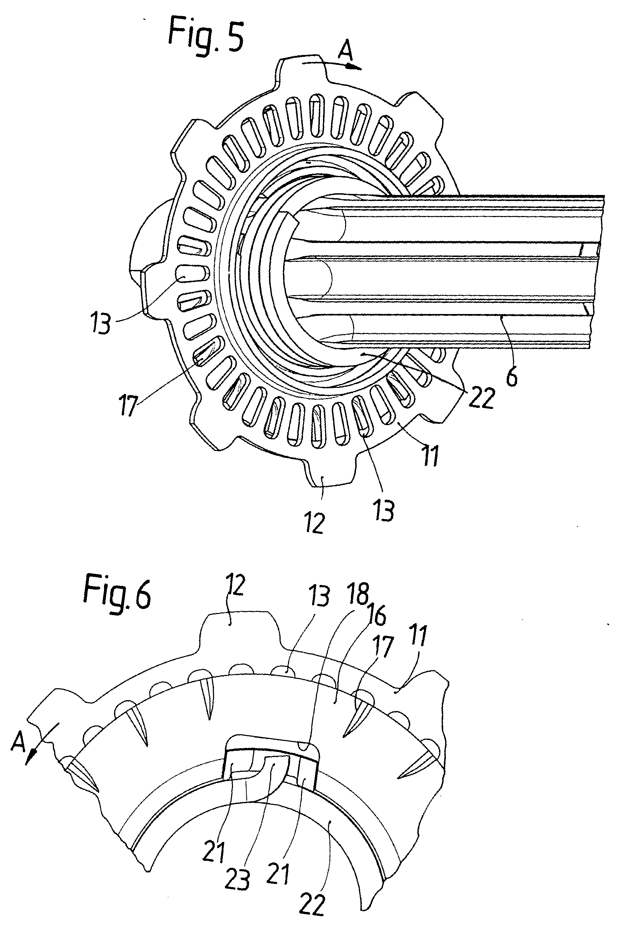

Wie aus Fig. 5 hervorgeht, weist das erste Rastelement 11 Rastfenster 13 am gesamten Umfang auf, die exakt die gleiche Teilung wie die Zähne 17 am zweiten Rastelement 16 aufweisen. Das auf dem Rastring 20 zentrierte erste Rastelement 11 wird mit einer Feder 19, die sich gegen das Antriebsglied abstützt, gegen das zweite Rastelement 16 gepreßt, wodurch die Zähne 17 mit den Rastfenstern 13 in Eingriff kommen.

Die Ansicht gemäß Fig. 6 zeigt das zweite Rastelement 16 mit seinem Durchbruch 18 und den beiden Nasen 21 des Rastringes 20, wie sie den Haken 23 in ihre Mitte nehmen und bei einer Drehbewegung die Friktionsfeder 22 mitnehmen können. Eine Mitnahme in der Antriebsdrehrichtung A wird jedoch nicht stattfinden, da die Stege zwischen den Rastfenstern 13 am ersten Rastelement 11 auf den Schrägen 17b der Zähne 17 des zweiten Rastelementes 16 aufgleiten und das erste Rastelement 11 gegen die Feder 19 ausweichen lassen. Obwohl die Friktionsfeder 22 als Ringfeder in der Antriebsrichtung einer Drehbewegung einen geringeren Widerstand entgegenstellt, ist dieser noch um eine Vielfaches größer als der Widerstand des Freilaufes, gebildet durch das erste Rastelement 11 und das zweite Rastelement 16 in der Antriebsdrehrichtung. Bei einer Drehbewegung entgegen der Antriebsdrehrichtung A jedoch laufen über den nun sperrenden Freilauf zwischen dem ersten Rastelement 11 und dem zweiten Rastelement 16 Kräfte, die dem Drehmoment entspricht, welches die sich zuziehende Friktionsfeder 22 auf der Achse 6 entwickelt. Die Verstellkraft, die notwendig ist, um die Rollen 8 auf dem Steigflächenprofil 7a zur Erzeugung einer Radialkraft aufsteigen zu lassen, wird über den Käfigring 9 und dessen Käfigarme 10 eingeleitet, an die Mitnehmer 12 des ersten Rastelementes 11 weitergegeben, und von den Stegen zwischen den Rastfenstern 13 auf die radial verlaufenden Kanten 17a der Zähne 17 am zweiten Rastelement 16 weitergeleitet. Die Begrenzung des Durchbruches 18 leitet die Kraft auf eine der Nasen 21 und somit auf den Haken 23 der Friktionsfeder 22 weiter, wodurch die zum Bremsen vorbestimmte Kraftdosierung herbeigeführt wird. Um zu gewährleisten, daß die beiden Rastelemente 11 und 16 in ihrer vorgeschriebenen Ebene quer zur Mittelachse der Achse 6 bleiben, wird eine Scheibe 24 an einem Sicherungsring 25 angeordnet, gegen welche sich die beiden Scheiben gegen die Kraft der Federn 19 abstützen.

Der Vorteil der Ausbildung dieses Freilaufes, der allerdings auch in Form von Klinken ausgebildet sein kann, liegt in seiner geringen Reibung, die sich dem Antriebsdrehmoment des Fahrradbenutzers in Antriebsdrehrichtung A entgegensetzt.

## Patentansprüche

1. Friktionseinrichtung zur Steuerung einer Klemmrollenkupplung für eine Antriebseinrichtung oder für eine Rücktritt-Bremseinrichtung (1) bei Fahrradnaben, umfassend ein um eine Achse (6) herum angeordnetes Antriebsglied (7) mit einem Steigflächenprofil (7a), mindestens eine Rolle (8), einen Käfigring (9), der mit der Achse (6) über eine Friktionsfeder (22) verbunden ist,
dadurch gekennzeichnet,
daß zwischen der beispielsweise als Schlingfeder ausgebildeten und in beide Drehrichtungen wirkenden Friktionsfeder (22) einerseits und dem Käfigring (8) andererseits ein in der einen Drehrichtung leerlaufende und in der anderen Drehrichtung mitnehmender Freilauf angeordnet ist.

2. Friktionseinrichtung nach Anspruch 1,
dadurch gekennzeichnet,
daß Freilauf aus einem mit dem Käfigring (9) verbundenen ersten Rastelement (11) und einem zweiten mit der Friktionsfeder (22) verbundenen Rastelement (16), sowie einer Feder (19) gebildet ist.

3. Friktionseinrichtung nach einem der Ansprüche 1 oder 2,
dadurch gekennzeichnet,
daß das erste Rastelement (11) über Mitnehmer (12) mit mindestens einem Käfigarm (10) des Käfigringes (9) drehfest verbunden ist und mittels einer Feder (19) mit dem zweiten Rastglied (16) in ständiger Anpreßverbindung gehalten wird.

4. Friktionseinrichtung nach einem der Ansprüche 1 bis 3,
dadurch gekennzeichnet,
daß das zweite Rastglied (16) über einen Rastring (20) mit dem einen als Haken (23) ausgebildeten Ende der Friktionsfeder (22) drehfest verbunden ist.
